# FASCICULE DE BREVET EUROPEEN

(11) **EP 0 382 584 B1**
(45) Date de publication et mention de la délivrance du brevet: **20.10.1993**
(21) Numéro de dépôt: 90400008.0
(22) Date de dépôt: 03.01.1990
(51) Int. Cl.: B60B 33/00, B60R 16/06

(54) **Roulette pour pied de meuble ou analogue permettant la décharge de l'électricité statique**
Statische Elektrizität entladende Möbellenkrolle
Static electricity discharging castor for furniture

(30) Priorité: 09.02.1989 FR 8901669
(43) Date de publication de la demande: 16.08.1990
(73) Titulaire: BRUANDET S.A., F-39700 Labarre (FR)
(72) Inventeur: Bruandet, Jean-René, F-39700 Labarre (FR)
(74) Mandataire: Flavenot, Bernard

(56) Documents cités:
- FR-A- 1 252 730
- US-A- 2 985 799
- US-A- 4 763 383

## Description

La présente invention concerne les roulettes pour les pieds de meubles ou analogue permettant de déplacer ceux-ci sur le sol, quelle que soit l'orientation de l'axe de rotation de ces roulettes par rapport au sol : parallèle, perpendiculaire ou oblique, et plus particulièrement les roulettes qui permettent de décharger l'électricité statique susceptible d'être emmagasinée par ces meubles et qui est très dérangeante pour certaines personnes qui sont amenées à les toucher.

Certains matériaux modernes utilisés pour l'agencement ou la décoration des lieux d'habitation, des espaces publics ou professionnels présentent l'inconvénient de produire, par frottement, de l'électricité statique. Tel est le cas des matériaux synthétiques entrant dans la composition de certains tapis et moquettes. Les personnes qui se déplacent sur ces moquettes et les meubles, en particulier les sièges mobiles, peuvent alors se charger d'une certaine quantité d'électricité statique qui se transmet au contact de l'un ou de l'autre. Or, il est bien connu que certaines personnes sont plus sensibles que d'autres à ce genre de phénomène et que, pour elles, ces décharges électriques provoquent une sensation extrêmement désagréable.

Pour pallier cet inconvénient, on a réalisé des systèmes permettant de connecter de façon continue la masse métallique des meubles avec le sol sur lequel ils reposent et peuvent être déplacés. Or, les pieds de certains de ces meubles, en particulier les sièges, sont très souvent munis de roulettes, dans le but de faciliter leur déplacement sur le sol. Dans ce cas, le problème posé par la décharge de l'électricité statique est plus complexe, et les systèmes permettant cette décharge réalisés jusqu'à ce jour, comme celui décrit dans le US-A-4 763 383, ne donnent souvent que partiellement satisfaction, sont généralement d'une conception compliquée et onéreuse, souvent même inesthétique, et ne sont pas adaptables à tous les types de roulettes.

La complexité du problème posé de la décharge de l'électricité statique par les roulettes en contact avec le sol réside dans le fait qu'en général, pour des raisons de coût de revient, ces roulettes adaptées aux pieds des meubles sont réalisées en matériaux plastiques facilement usinables ou moulables, mais présentant l'inconvénient d'être électriquement isolants. Ces roulettes ne peuvent donc conduire l'électricité statique vers le sol avec lequel elles sont en contact, même si elles sont positionnées sur les pieds des meubles par des tiges métalliques.

La présente invention a pour but de réaliser une roulette pour pied de meuble, qui permette une décharge de l'électricité statique de la masse du meuble vers le sol sur lequel elle est amenée à rouler, qui soit d'une réalisation et d'une adaptation des plus aisées, tout en conservant les avantages de celles de l'art antérieur, c'est-à-dire un prix de revient relativement faible et un poids peu important, le principal matériau utilisé étant préférentiellement un matériau plastique et le nombre des pièces métalliques, dont la présence est cependant indispensable, y étant réduit au maximum.

Plus précisément, la présente invention a pour objet une roulette pour pied de meuble ou analogue comprenant une embase en un matériau électriquement isolant, ladite embase comportant au moins un premier orifice, des moyens associés à ladite embase pour coopérer avec le sol, ledit premier orifice constituant un palier pour un pivot de rotation en un matériau électriquement conducteur apte à lier ladite embase avec ledit pied, ce pivot comportant une première extrémité d'une section sensiblement complémentaire de celle dudit premier orifice et une seconde extrémité d'une section supérieure à celle de ladite première extrémité de façon à former un épaulement apte à venir au contact du bord dudit premier orifice, et des moyens de conduction électrique continue entre ledit pivot et le sol sur lequel elle est apte à se déplacer, caractérisée par le fait que cesdits moyens de conduction électrique sont constitués par une première partie en forme de cosse en un matériau conducteur électrique dont l'ouverture est sensiblement supérieure à la section de ladite première extrémité dudit pivot de rotation, mais inférieure à celle de ladite seconde extrémité, ladite cosse étant interposée entre le bord dudit premier orifice et ledit épaulement dudit pivot, et par une seconde partie en forme de conducteur électrique souple, ce conducteur étant lié électriquement à ladite cosse et disposé dans une percée réalisée dans ladite embase, pour venir émerger d'une face de celle-ci, d'une longueur lui permettant de venir au contact dudit sol.

D'autres caractéristiques et avantages de la présente invention apparaîtront au cours de la description suivante donnée en regard des dessins annexés à titre illustratif, mais nullement limitatif, dans lesquels :
La figure 1 représente une vue "en écorché" d'un premier mode de réalisation d'une roulette selon l'invention,
La figure 2 représente, vu en perspective, un mode de réalisation d'un élément particulier de la roulette selon la figure 1, et
La figure 3 représente une vue en coupe d'un autre mode de réalisation d'une roulette selon l'invention.

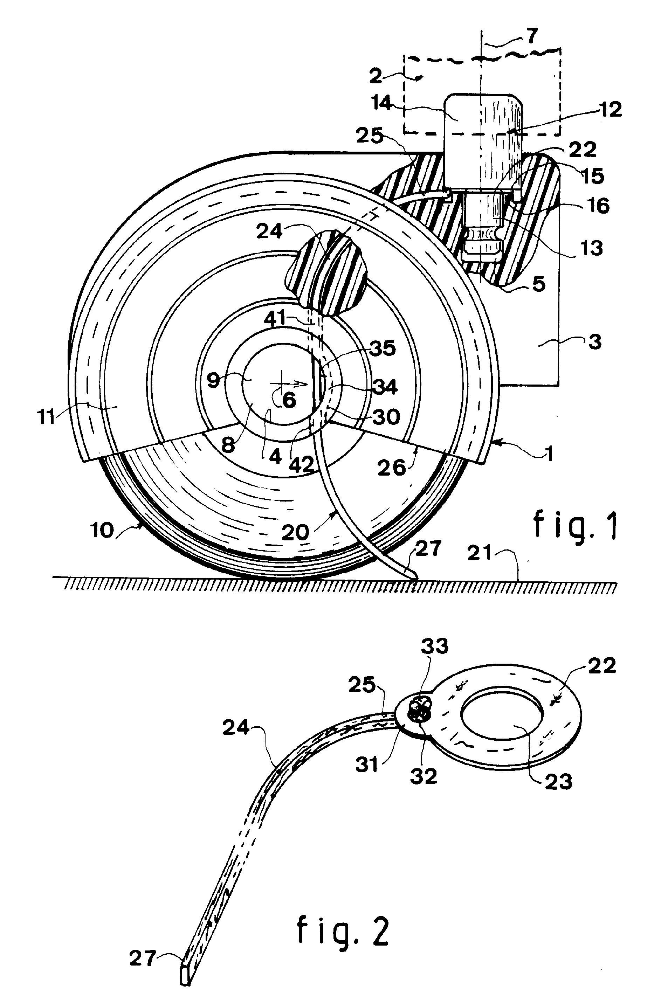

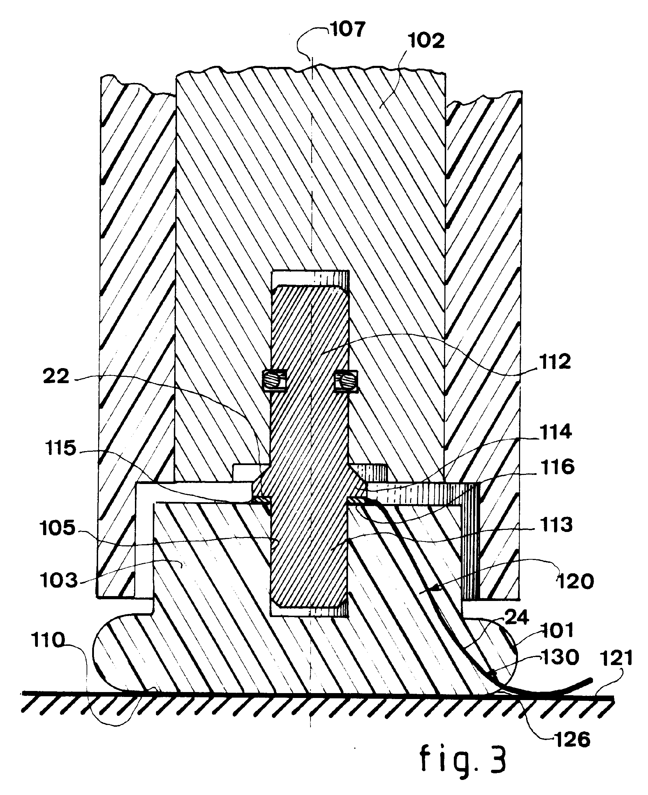

Les deux figures 1 et 2 représentant un même mode de réalisation d'une roulette selon l'invention, les mêmes références y désignent les mêmes éléments, quelle que soit la figure sur laquelle elles apparaissent.

La figure 1 représente, dans une vue partiellement "en écorché", un mode de réalisation d'une roulette 1 pour pied de meuble 2 ou analogue shématiquement représenté. Cette roulette comprend une embase 3 en un matériau électriquement isolant, par exemple une matière plastique. L'embase 3 comporte au moins deux orifices 4 et 5 réalisés suivant deux axes 6 et 7 sensiblement perpendiculaires. Le premier 4 des deux orifices constitue un palier 8 pour un arbre de rotation 9 de moyens de roulement, par exemple de petites roues 10 généralement au nombre de deux se plaçant de part et d'autre de ce palier 8 et donc d'une partie médiane 11 de l'embase 3.

Le second orifice 5 constitue un palier pour un pivot de rotation 12 en matériau électriquement conducteur apte à lier l'embase 3 avec le pied 2 du meuble. Ce pivot comporte une première extrémité 13 d'une section sensiblement complémentaire de celle du second orifice 5 et une seconde extrémité 14 d'une section supérieure à celle de cette première extrémité, de façon à former un épaulement 15 apte à venir au contact du bord 16 du second orifice.

La roulette 1 comprend en outre des moyens de conduction électrique continue 20 entre le pivot 12 et le sol 21 sur lequel elle est apte à se déplacer. Ces moyens de conduction électrique 20, dont un mode de réalisation est représenté isolé sur la figure 2, comportent une première partie 22 en forme de cosse en un matériau conducteur électrique, par exemple en aluminium, en acier ou en un matériau plastique dopé par un matériau conducteur, graphite, poudre métallique, etc., dont l'ouverture 23 est sensiblement supérieure à la section de la première extrémité 13 du pivot de rotation, mais inférieure à celle de sa seconde extrémité 14, de façon que cette cosse puisse être interposée entre le bord 16 du second orifice 5 réalisé dans l'embase et l'épaulement 15 du pivot, et une seconde partie 24 en forme de conducteur électrique souple relié électriquement à la première partie 22.

Ce conducteur 24 est lié électriquement à la cosse par l'une de ses extrémités 25, par tout moyen de liaison dont plusieurs types sont possibles selon le mode de réalisation industrielle choisi pour ces moyens de conduction électrique 20.

L'embase comporte en outre une percée 30 qui relie le bord 16 de l'orifice 5 avec une face inférieure 26 de celle-ci. La section de cette percée est légèrement supérieure à celle du conducteur souple 24, pour que celui-ci puisse y être glissé et venir émerger par la face 26. Ce conducteur 24 a de plus une longueur permettant à son autre extrémité 27 de venir au contact du sol, lorsqu'il est lié à la cosse par sa première extrémité 25.

L'un des avantages de la structure de cette roulette selon l'invention est de permettre que les moyens de conduction électrique 20 soient d'une seule pièce, en un et même matériau, par exemple un matériau plastique dopé avec un matériau conducteur, graphite, poudre métallique, etc. En effet, il est évident que, dans ce cas, le conducteur souple 24 peut être aisément introduit et glissé dans la percée 30, la cosse 22, quant à elle, étant tout aussi facilement placée autour de la première extrémité 13 du pivot 12, sur l'épaulement 15, ce qui démontre l'extrême facilité du montage de ces moyens de conduction 20, ainsi que celle de leur changement en cas, par exemple, d'usure ou de rupture.

Les deux parties 22 et 24 peuvent cependant être réalisées en deux matériaux différents et reliées électriquement entre elles, par exemple par soudage si la nature de ces matériaux le permet, par emboutissage, etc.

Selon un mode de réalisation avantageux, les moyens de liaison entre la cosse 22 et le conducteur souple 24, lorsque ce dernier est par exemple en un matériau souple comme du caoutchouc dopé de particules conductrices, peuvent être constitués par une partie en saillie 31 de la cosse 22 comme représenté sur la figure 2, cette partie en saillie comportant, par exemple, un orifice 32, et par un renflement 33 formant bouton réalisé sur l'extrémité 25 de la seconde partie 24 apte à être introduit en force dans l'orifice de la partie en saillie de la cosse. Ce mode de réalisation est avantageux, car il permet, notamment, le remplacement de la seconde partie des moyens de conduction dans le cas où ils viendraient à être détériorés ou trop usés, et ne feraient plus contact avec le sol.

La seconde partie des moyens de conduction peut être réalisée dans tous matériaux permettant de lui donner la forme d'un conducteur souple, par exemple une fine languette d'aluminium, une lanière en caoutchouc ou en un matériau plastique dopé avec un matériau conducteur, par exemple du graphite ou une poudre métallique, etc.

Dans un mode de réalisation présentant un avantage certain lorsque, par exemple, les axes des roues 10 peuvent, eux aussi, se charger d'électricité statique comme explicité ci-avant, la percée 30 réalisée dans l'embase 3 pour le passage de la seconde partie 24 des moyens de conduction 20 comporte une portion sécante avec le premier orifice 4 et, avantageusement, formant en outre un dégagement latéral 34 permettant l'effacement de cette seconde partie lorsque l'arbre 9 est introduit dans le premier orifice 4, tout en maintenant son contact avec cet arbre. Ce dégagement peut être constitué par un léger évidement réalisé dans la paroi de cet orifice, et donc ouvert en 35 sur cet orifice 4.

De cette façon, quand l'arbre 9 qui est introduit dans l'orifice 4 est en un matériau électriquement conducteur, la seconde partie souple 24 des moyens de conduction 20 peut s'effacer dans le dégagement 34 pour laisser le passage de cet arbre 9. Par contre, quand la roulette se déplace sur le sol 21, l'extrémité 27 du conducteur souple frottant sur celui-ci, il s'exerce, sur cette extrémité, une traction qui, si légère soit-elle, a tendance à redresser le conducteur souple dans l'alignement des deux portions de percée 41, 42 encadrant l'évidement de part et d'autre de l'orifice 4, l'obligeant ainsi à frotter contre l'arbre 9 et à établir un second contact électrique.

La figure 3 représente un autre mode de réalisation d'une roulette selon l'invention dans le cas où son axe de rotation est perpendiculaire au plan du sol sur lequel elle est amenée à se déplacer. Ce mode de réalisation de roulette constitue en fait un type de patin généralement utilisé sur des chaises ou analogue.

La roulette 101 pour pied de meuble ou analogue 102 illustrée sur la figure 3 comprend une embase 103 en un matériau électriquement isolant. Cette embase comporte au moins un premier orifice 105 suivant un axe 107. A cette embase, sont associés des moyens 110 pour coopérer avec le sol 121. Dans cette réalisation, ces moyens sont constitués par un patin qui peut frotter sur le sol. Le premier orifice 105 constitue un palier pour un pivot de rotation 112 en un matériau électriquement conducteur apte à lier l'embase 103 avec le pied 102. Ce pivot comporte une première extrémité 113 d'une section sensiblement complémentaire de celle du premier orifice 105 et une seconde extrémité 114 d'une section supérieure à celle de la première extrémité de façon à former un épaulement 115 apte à venir au contact du bord 116 du premier orifice.

Cette roulette 101 comprend en outre des moyens de conduction électrique continue 120 entre le pivot et le sol sur lequel elle est apte à se déplacer ou avec lequel elle coopère par frottement. Ces moyens de conduction électrique sont constitués, par exemple, comme ceux décrits en regard de la figure 2.

Il est cependant mentionné que la cosse 22 est interposée entre le bord 116 du premier orifice 105 et l'épaulement 115 du pivot, tandis que le conducteur souple 24 est disposé dans une percée 130 réalisée dans l'embase 103, pour venir émerger d'une face 126 de celle-ci, d'une longueur lui permettant de venir au contact du sol 121. La fonction de cette roulette 101 est identique à celle décrite ci-avant et ne sera pas spécifiquement rappelée ici.

La structure des deux roulettes décrites ci-dessus permet donc de réaliser très simplement une roulette pour pied de meuble qui permet la décharge de l'électricité statique emmagasinée dans ce meuble, notamment dans ses parties métalliques en relation avec le pivot. Cette structure permet également un changement très rapide des moyens de conduction, ou d'une partie de ces moyens, notamment le conducteur souple.

## Revendications

1. Roulette (1,101) pour pied de meuble ou analogue (2,102) comprenant une embase (3,103) en un matériau électriquement isolant, ladite embase comportant au moins un premier orifice (5,105), des moyens associés à ladite embase (10,110) pour coopérer avec le sol, ledit premier orifice (5,105) constituant un palier pour un pivot de rotation (12,112) en un matériau électriquement conducteur apte à lier ladite embase avec ledit pied, ce pivot comportant une première extrémité (13,113) d'une section sensiblement complémentaire de celle dudit premier orifice (5,105) et une seconde extrémité (14,114) d'une section supérieure à celle de ladite première extrémité de façon à former un épaulement (15,115) apte à venir au contact du bord (16,116) dudit premier orifice, et des moyens de conduction électrique continue (20,120) entre ledit pivot et le sol sur lequel elle est apte à se déplacer, caractérisée par le fait que cesdits moyens de conduction électrique sont constitués par une première partie en forme de cosse (22) en un matériau conducteur électrique dont l'ouverture (23) est sensiblement supérieure à la section de ladite première extrémité dudit pivot de rotation, mais inférieure à celle de ladite seconde extrémité, ladite cosse étant interposée entre le bord (16,116) dudit premier orifice et ledit épaulement (15,115) dudit pivot, et par une seconde partie (24) en forme de conducteur électrique souple, ce conducteur étant lié électriquement à ladite cosse et disposé dans une percée (30,130) réalisée dans ladite embase, pour venir émerger d'une face (26,126) de celle-ci, d'une longueur lui permettant de venir au contact dudit sol (21,121).

2. Roulette selon la revendication 1, caractérisée par le fait que ladite embase comporte un second orifice (4) réalisé suivant un axe (6) sensiblement perpendiculaire à l'axe (7) dudit premier orifice (5), cedit second orifice étant apte à constituer un palier (8) pour un arbre de rotation (9) de moyens de roulement (10) qui constituent les moyens de coopération avec le sol (21).

3. Roulette selon la revendication 2, caractérisée par le fait que ladite percée (30) a une portion sécante avec ledit second orifice (4).

4. Roulette selon la revendication 3, caractérisée par le fait que ladite percée (30) comporte deux portions (41,42) réalisées dans ladite embase situées respectivement de part et d'autre dudit second orifice (4).

5. Roulette selon la revendication 4, caractérisée par le fait que les deux dites portions (41,42) sont reliées par un évidement (34) réalisé dans la paroi dudit second orifice (4) et comportant une ouverture (35) sur cedit second orifice (4).

6. Roulette selon l'une des revendications 1 à 5, caractérisée par le fait que ledit conducteur électrique souple (24) est réalisé dans l'un des matériaux suivants : caoutchouc et matériau plastique, tous deux comportant un matériau dopant conducteur.

7. Roulette selon la revendication 6, caractérisée par le fait que le matériau dopant est l'un des matériaux suivants : graphite et poudre métallique.

8. Roulette selon l'une des revendications précédentes, caractérisée par le fait que la première partie en forme de cosse (22) et la seconde partie en forme de conducteur électrique souple (24) desdits moyens de conduction électrique (20) sont d'une seule pièce, en un et même matériau conducteur.

## Patentansprüche

1. Rolle (1, 101) für einen Möbelfuß oder dergleichen (2, 102), umfassend eine Basis (3, 103) aus einem elektrisch isolierenden Material, welche Basis mindestens eine erste Öffnung (5, 105) umfaßt, der Basis (10, 110) zugeordnete Mittel zum Zusammenwirken mit dem Boden, welche erste Öffnung (5, 105) ein Lager für einen Schwenkzapfen (12, 112) aus einem elektrisch leitenden Material bildet, welcher die Basis mit dem Fuß verbindet, welcher Schwenkzapfen ein erstes Ende (13, 113) mit einem Querschnitt im wesentlichen komplementär zu jenem der ersten Öffnung (5, 105) besitzt sowie ein zweites Ende (14, 114) mit einem Querschnitt, der größer ist als der des ersten Endes, um so eine Schulter (15, 115) zu bilden, die in Kontakt mit dem Rand (16, 116) der ersten Öffnung treten kann, und mit elektrisch gleichleitenden Mitteln (20, 120) zwischen dem Schwenkzapfen und mit Boden, auf dem die Rolle verlagerbar sein soll, dadurch gekennzeichnet, daß die elektrisch leitenden Mittel aus einer ersten Partie in Form einer Öse (22) aus einem elektrisch leitenden Material bestehen, dessen Öffnung (23) deutlich größer ist als der Querschnitt des ersten Endes des Schwenkzapfens, jedoch kleiner als jener des zweiten Endes, welche Öse zwischen dem Rand (16, 116) der ersten Öffnung und der Schulter (15, 115) des Schwenkzapfens eingefügt ist, sowie von einer zweiten Partie (24) in Form eines biegsamen elektrischen Leiters, welcher Leiter elektrisch mit der Öse verbunden ist und in einer Bohrung (30, 130), die in der Basis ausgebildet ist, angeordnet ist, um auf einer Seite (26, 126) derselben mit einer Länge herauszuragen, die es ihm ermöglicht, in Kontakt mit dem Boden (21, 121) zu gelangen.

2. Rolle nach Anspruch 1, dadurch gekennzeichnet, daß die Basis eine zweite Öffnung (4) umfaßt, die längs einer Achse (6) verläuft, die im wesentlichen senkrecht steht zu der Achse (7) der ersten Öffnung (5), welche zweite Öffnung ein Lager (8) für eine Drehwelle (9) von Rollenmitteln (10) bildet, welche die Mittel zum Zusammenwirken mit dem Boden (21) darstellen.

3. Rolle nach Anspruch 2, dadurch gekennzeichnet, daß die Bohrung (30) einen Abschnitt umfaßt, der eine Sekante bezüglich der zweiten Öffnung (2) darstellt.

4. Rolle nach Anspruch 3, dadurch gekennzeichnet, daß die Bohrung (30) zwei Abschnitte (41, 42) umfaßt, die in der Basis ausgebildet sind und sich beidseits der zweiten Öffnung (4) befinden.

5. Rolle nach Anspruch 4, dadurch gekennzeichnet, daß die beiden Abschnitte (41, 42) durch eine Ausnehmung (34) verbunden sind, die in der Wandung der zweiten öffnung (4) ausgebildet ist und eine Öffnung (35) zu der zweiten Öffnung (4) aufweist.

6. Rolle nach einem der Ansprüche 1 bis 5, dadurch gekennzeichnet, daß der biegsame elektrische Leiter (24) aus einem der folgenden Materialien hergestellt ist: Gummi und Kunststoffmaterial, beide mit einem leitenden Füllmaterial versehen.

7. Rolle nach Anspruch 6, dadurch gekennzeichnet, daß das Füllmaterial eines der folgenden Materialien ist: Graphit und Metallpulver.

8. Rolle nach einem der vorangehenden Ansprüche, dadurch gekennzeichnet, daß die erste Partie in Form einer Öse (22) und die zweite Partie in Form des biegsamen elektrischen Leiters (24) der elektrisch leitenden Mittel (20) einstückig ausgebildet sind und aus ein- und demselben leitenden Material.

## Claims

1. A castor (1, 101) for a furniture leg or the like (2, 102) the castor comprising a base (3, 103) made of an electrically insulating material, the said base including at least one first orifice (5, 105); means associated with the said base (10, 110) for cooperating with the ground, the said first orifice (5, 105) constituting a bearing for a rotary pivot (12, 112) made of an electrically conductive material for fixing said base to said leg, said pivot including a first end (13, 113) with a section substantially complementary to the end of said first orifice (5, 105) and a second end (14, 114) having a section which is larger than the section of said first end thereby forming a shoulder (15, 115) which comes into contact with the edge (16, 116) of said first orifice: and continuous electrical conduction means (20, 120) between said pivot and the ground on which the base moves, said caster being characterized by the fact that said electrical conduction means are constituted by a first portion in the form of a terminal (22) made of an electrically conductive material and having an opening (23) that is substantially larger than the section of said first end of said rotary pivot, but smaller than the section of said second end, the said terminal being interposed between the edge (16, 116) of said first orifice and said shoulder (15, 115) of said pivot, and by a second portion (24) in the form of a flexible electrical conductor, said conductor being electrically connected to said terminal and being disposed in a hole (30, 130) in said base, the conductor thereby emerging from one side (26, 126) of the base, and being long enough to come into contact with the ground (21, 121).

2. A castor according to claim 1, characterized by the fact that said base includes a second orifice (4) formed on an axis (6) substantially perpendicular to the axis (7) of said first orifice (5), said second orifice constituting a bearing (8) for a rotary shaft (9) of running means (10) which constitute the means for cooperating with the ground (21).

3. A castor according to claim 2, characterized by the fact that the said hole (30) has a portion intersecting said second orifice (4).

4. A castor according to claim 3, characterized by the fact that said hole (30) includes two portions (41, 42) formed in said base and situated respectively on either side of said second orifice (4).

5. A castor according to claim 4, characterized by the fact that the two said portions (41, 42) are interconnected by a cavity (34) formed in the wall of said second orifice (4) and which includes an opening (35) onto said second orifice (4).

6. A castor according to any one of claims 1 to 5, characterized by the fact that the said flexible electrical conductor (24) is made from one of the following materials: rubber and plastic, both including a conductive doping material.

7. A castor according to claim 6, characterized by the fact that the doping material is one of the following materials: graphite and metal powder.

8. A castor according to any preceding claim, characterized by the fact that the first portion in the form of a terminal (22) and the second portion in the form of a flexible electrical conductor (24) of the electrical conduction means (20) constitute a single part, made from the same conductive material.
